# EUROPÄISCHE PATENTSCHRIFT

(11) **EP 1 431 237 B1**
(45) Veröffentlichungstag und Bekanntmachung des Hinweises auf die Patenterteilung: **17.01.2007**
(21) Anmeldenummer: 03026755.3
(22) Anmeldetag: 21.11.2003
(51) Int. Cl.: B66F 9/07, B66F 9/14

(54) **Lasttraggestell für ein Regalbediengerät**
Load support frame for stacker crane
Cadre de support pour transstockeur

(30) Priorität: 18.12.2002 AT 18932002
(43) Veröffentlichungstag der Anmeldung: 23.06.2004
(73) Patentinhaber: TGW Transportgeräte GmbH, 4600 Wels (AT)
(72) Erfinder: Hansl, Rudolf, Dipl.-Ing., A 4813 Altmünster (AT); Reischl, Josef, Dipl.-Ing. (FH), A 4600 Wels (AT)
(74) Vertreter: Secklehner, Günter

(56) Entgegenhaltungen:
- EP-A- 1 180 491
- CH-A- 678 310
- DE-A- 2 934 619
- DE-A- 10 040 492
- FR-A- 2 189 281

## Beschreibung

Die Erfindung betrifft ein Lasttraggestell, wie im Oberbegriff des Anspruches 1 beschrieben.

Ein solches Lasttraggestell ist aus der EP 1 180 491 A1 bekannt, das Regalbediengerät zur Bedienung eines Regallagers mit einer Vielzahl von Regalflächen, die von einem Regalgang aus zugänglich sind und jeweils mehrere hintereinander liegende Regallagerplätze aufweisen, offenbart. Das Regalbediengerät für ein derartiges Regallager umfasst eine Plattform mit Beschickungsvorrichtungen zum Ein- und Auslagern von Objekten in das Regallager sowie Hub- und Fördereinrichtungen zum Umsetzen der Objekte zwischen Speicherplätzen auf der Plattform. Dazu sind auf einem Traggestell, das auf einem Hubschlitten des Regalbediengerätes angeordnet ist mehrere parallel zueinander verlaufende Tragvorrichtungen mit verfahrbaren Teleskop-Tragarmen zur Aufnahme eines Ladehilfsmittels, wie Palette, Box, vorgesehen. Mit zu der Förderrichtung der Tragvorrichtungen parallel verlaufenden Förderrichtungen sind am Traggestell paarweise zwei zusätzliche Fördereinrichtungen, ausgebildet als, mit einer lastaufnehmenden Oberfläche eine gemeinsame Förderebene ausbildende, Linearförderer vorgesehen. Diese sind mittels Hubeinrichtungen in zur Last aufnehmenden Oberfläche der Teleskopförderer senkrechten Richtung verstellbar um die Förderebene zwischen einer Stellung unterhalb der Last aufnehmenden Oberfläche der Teleskopförderer und einer Stellung oberhalb der Last aufnehmenden Oberfläche. Zusätzlich sind zur Anhebung der auf den Speicherplätzen gelagerten Lagerobjekte, für das Umsetzen zwischen den Speicherplätzen, seitlich der Fördereinrichtungen, einem jeden Speicherplatz zugeordnet, Hubeinrichtungen vorgesehen.

Aus der DE 100 40 492 A1 ist eine teleskopische Tischanordnung auf einem Lasttraggestells eines Regalbediengerätes zum Ein- und Auslagern von Paletten, Boxen etc. in oder aus Regalen bekannt, das ein Gestellt mit Antriebseinheit und einen Ausleger aus mehreren teleskopartig ineinandergreifenden und auf Führungsschienen ineinander verfahrbaren Elementen aufweist, womit eine entsprechende Reichweite des Auslegers zur Bedienung von zumindest zwei hintereinander angeordneten Stellplätzen in Regalen erreicht wird.

Weiters ist es auch bekannt, einen mit teleskopisch verfahrbaren Lasttragarmen versehenen Lasttisch eines Hubgerätes zusätzlich im Bereich zwischen den Lasttragarmen mit einer För-dereinrichtung, z.B. einem Bandförderer oder Kettenförderer, auszustatten. Damit wird die Manipulation von Ladehilfsmitteln bei Übergab dieser an vor- oder nachgeordneten Zu- oder Abfördereinrichtungen, wie Bandförderer, Rollenbahnen etc., vereinfacht.

Aufgabe der Erfindung ist es ein Lasttraggestell zu schaffen, mit dem kurze Ein- und Auslagerspielzeiten erreicht werden.

Diese Aufgabe der Erfindung wird dadurch erreicht, dass die Linearförderer der Fördervorrichtungen mit Lasttragflächen zwei, zueinander in einem Abstand parallele, senkrecht zur Mittelebene verlaufende Förderebenen, ausbilden und eine Förderebene im bezug auf eine, durch die Lasttragfläche der Tragvorrichtungen gebildete Transportebene in einer geringen Distanz oberhalb der Transportebene und die weitere Förderebene in einer Distanz unterhalb der Transportebene verlaufen. Der überraschende Vorteil dabei ist, dass dadurch sowohl ein Längs- wie auch Quertransport der Ladehilfsmittel möglich ist und vielfach erforderliche Wendeeinrichtungen im Zu- und Abförderbereich und bei derartigen Einrichtungen anfallende Leerzeiten, die eine Verlängerung der Ladespielzeiten und damit eine Erhöhung der Lagerkosten bedeuten, wesentlich reduziert werden.

Die Ausbildung ermöglicht die Berücksichtigung der unterschiedlichen Niveaus der für die Aufnahme des Ladehilfsmittels vorgesehene Unterseite, die durch die spezielle Ausgestaltung des Unterbaus an Ladehilfsmitteln in Abhängigkeit ihrer Förderrichtung bedingt sind. Die wahlweise Förderung des Ladehilfsmittels in Richtung der Längserstreckung oder quer dazu wird durch die Abstimmung der zu einer Transportebene auf unterschiedliche Niveaus festgelegten Förderebenen erreicht wodurch unter Beibehaltung der Transportebene - entsprechend der Lasttragfläche der Tragvorrichtungen - die Fördervorrichtungen bzw. die von den Fördervorrichtungen ausgebildete Lasttragflächen bei Längstransport gegenüber der Transportebene tiefer und bei einem Quertransport höher verlaufen und damit keinerlei sonstige Höhenanpassung oder zeitaufwendige Verstellung von technischen Zusatzeinrichtungen erforderlich ist.

Möglich ist dabei auch eine Ausbildung nach Anspruch 2, wodurch eine exakte Abstimmung auf die konstruktiven Gegebenheiten des Unterbaus des Ladehilfsmittels erreicht wird.

Gemäß der vorteilhaften Weiterbildung wie im Anspruch 3 beschrieben, wird ein universeller Aufbau für den Längs- und Quertransport des Ladehilfsmittels erreicht und werden aufwendige Stelleinrichtungen zur Anpassung des Lasttraggestells eingespart.

Eine vorteilhafte Weiterbildung beschreibt auch Anspruch 4, wodurch bereits technisch bewährte Einrichtungen für den Transport und die Manipulation des Ladehilfsmittels am Lasttraggestell zum Einsatz gelangen.

Von Vorteil sind auch Ausbildungen nach den Ansprüchen 5 und 6, wodurch der mechanische und steuerungstechnische Aufwand gering gehalten wird.

Durch die in den Ansprüchen 7 und 8 beschriebenen vorteilhaften Ausbildungen wird eine Seitenführungen für das Ladehilfsmittel gewährleistet, um dieses auf dem Lasttraggestell mit den Fördervorrichtungen zur Erzielung der Sicherheit beim Transportvorgang zu zentrieren.

Gemäß der im Anspruch 9 beschriebenen vorteilhaften Weiterbildung ist eine exakte Abstimmung zwischen den Führungselementen und den Fördervorrichtungen möglich.

Die in den Ansprüchen 10 und 11 beschriebene Weiterbildung gewährleistet die Ein- und Auslagerung der Ladehilfsmittel bei der für eine wirtschaftliche Lagerung großteils vorgesehenen doppelt tiefe Regalanordnung.

Gemäß den in den Ansprüchen 12 und 13 beschriebenen vorteilhaften Weiterbildungen wird das Ladehilfsmittel im Bereich des Lasttraggestells auf den Fördervorrichtungen aufgelagert und bei Abgabe kontinuierlich von den Fördervorrichtungen auf die Tragvorrichtungen übergeben, wodurch erhöhte Verfahrgeschwindigkeiten erreicht und damit die Lagerspielzeiten ganz wesentlich reduziert werden.

Gemäß den in den Ansprüchen 14 und 15 beschriebenen Weiterbildungen können Positioniervorgänge des Ladehilfsmittel sowohl im Regal wie auch am Lasttraggestell mit minimierten Taktzeiten durchgeführt werden.

Vorteilhaft ist aber auch eine Ausbildung nach Anspruch 16, wodurch ein wirtschaftlicher Energieeinsatz erreicht wird.

Gemäß den in den Ansprüchen 17 bis 22 beschriebenen vorteilhaften Ausbildungen wird sowohl eine exakt zentrische Positionierung des Ladehilfsmittels auf dem Lasttraggestell wie auch eine positionsgenaue Sicherung des Ladehilfsmittels erreicht, die es ermöglicht, mit hohen Beschleunigungswerten und damit Verfahrgeschwindigkeiten die Umschlagzeiten und damit verbundene Lagerkosten zu reduzieren.

Schließlich sind aber auch Ausbildungen gemäß den Ansprüchen 23 und 24 von Vorteil, weil dadurch, das Eigengewicht der Vorrichtung reduziert und damit der Nutzlastfaktor, der sich aus dem Verhältnis von Nutzlast zu Eigengewicht errechnet, gesteigert wird und dies sowohl positive Auswirkungen für einen effizienten Energieeinsatz beim Betrieb derartiger Anlagen bedeutet, wie es weiters auch der Verkürzung der Umschlagzeiten durch die zu bewegende geringeren Massen dienlich ist.

Zum besseren Verständnis der Erfindung wird diese im nachfolgenden anhand der in den Figuren dargestellten Ausführungsbeispielen näher erläutert.

Es zeigen:
- Fig. 1: ein Regallager mit einem mit dem erfindungsgemäß ausgebildeten Lasttraggestell ausgestatteten Regalbediengerät;
- Fig. 2: ein Teilbereich des Regallagers mit dem Zu- und Abförderbereich und dem Regalbediengerät mit dem erfindungsgemäßen Lasttraggestell;
- Fig. 3: das Lasttraggestell im Querschnitt, in vereinfachter schematischer Darstellung;
- Fig. 4: eine weitere Ausbildung des erfindungsgemäßen Lasttraggestells;
- Fig. 5: eine schematische Darstellung des Lasttraggestells mit Darstellung der Transportmöglichkeiten eines Paletten- Ladehilfsmittels;
- Fig. 6: eine schematische Darstellung eines Endbereiches des Lasttraggestells;
- Fig. 7: eine andere Ausbildung des erfindungsgemäßen Lasttraggestells zur mehrfach- Ein-und Auslagerung in einem Regallager.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

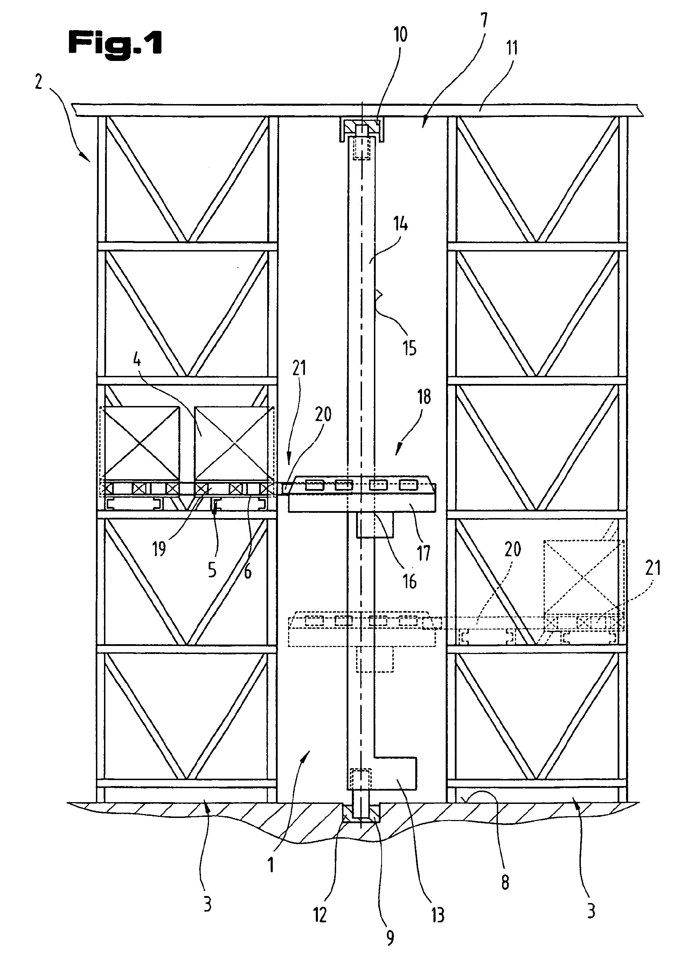

In der Fig. 1 ist ein Regalbediengerät 1 und ein Regallager 2 am Beispiel eines Hochregallagers mit Regalen 3 zur Lagerung von Gütern, Waren 4 auf oder in Ladehilfsmitteln 5, z.B. Paletten 6, Kartonboxen, Gitterboxen, etc., gezeigt. Das Regalbediengerät 1 ist hier beispielhaft in einem Regalgang 7 in einer auf oder in einer Aufstandsfläche 8 verlaufenden Schiene 9 und einer Schiene 10 an einer Decke 11 des Regallagers 2 mit Fahrwerken 12 und einem Antrieb 13 verfahrbarer, senkrecht zur Aufstandsfläche 8 erstreckender Mast 14. Dieser bildet eine Führungsanordnung 15 für einen zur Aufstandsfläche 8 in senkrechter Richtung verstellbaren, mittels Antrieb 16 verfahrbaren Hubschlitten 17.

Das Regalbediengerät 1 kann durch ein Einmastregalbediengerät, wie aus der DE 44 05 952 A1, DE 195 34 291 A1, DE 196 14 660 A1 bekannt oder als Zweimastregalbediengerät, wie aus der DE 195 34 291 A1 bekannt, gebildet werden.

Am Hubschlitten 17 des Regalbediengeräts 1 ist ein Lasttraggestell 18 angeordnet. Diese wird durch ein Traggestell 19 bevorzugt in Blech-Profilausführung, zur Erzielung eines geringen Eigengewichts, gefertigt und ist dieses Traggestell 19 mit aus dem Stand der Technik bekannten, durch verfahrbare Teleskop-Tragarme 20 gebildeten Tragvorrichtungen 21 versehen. Die Tragvorrichtungen 21 mit den Teleskop-Tragarmen 22 sind bevorzugt mehrfach teleskopierbar, womit ausgehend von einem vorgegebenen Regalgang 7 die ein- oder beidseits des Regalganges 7 angeordnete Regale 3, wie dargestellt Doppelregale, zur Ein- und Auslagerung der Ladehilfsmittel 5 zu bedienen sind und zwar unabhängig, ob die in vollen Linien gezeigte, dem Regalgang 7 benachbarte Palette 6, oder eine vom Regalgang 7 entfernte, wie in strichlierten Linien gezeigte Palette, ein- bzw. auszulagern ist. Zu erwähnen ist, dass das Regallager 2 selbstverständlich auch in Form von nicht dargestellten Einzelregalen gebildet sein kann, wobei die wirtschaftlichere Lösung die der Doppelregale, wie im Ausführungsbeispiel gezeigt, darstellt. Das Regal 3 kann sowohl für eine Längs- oder Quereinlagerung der Ladehilfsmittel 5, z.B. der Paletten 6, wie z.B. solche nach DIN 15146 oder DIN 15156 genormter Paletten oder Gitterboxen ausgebildet sein. Selbstverständlich sind auch andere Grundrissformen von Ladehilfsmitteln 5 möglich.

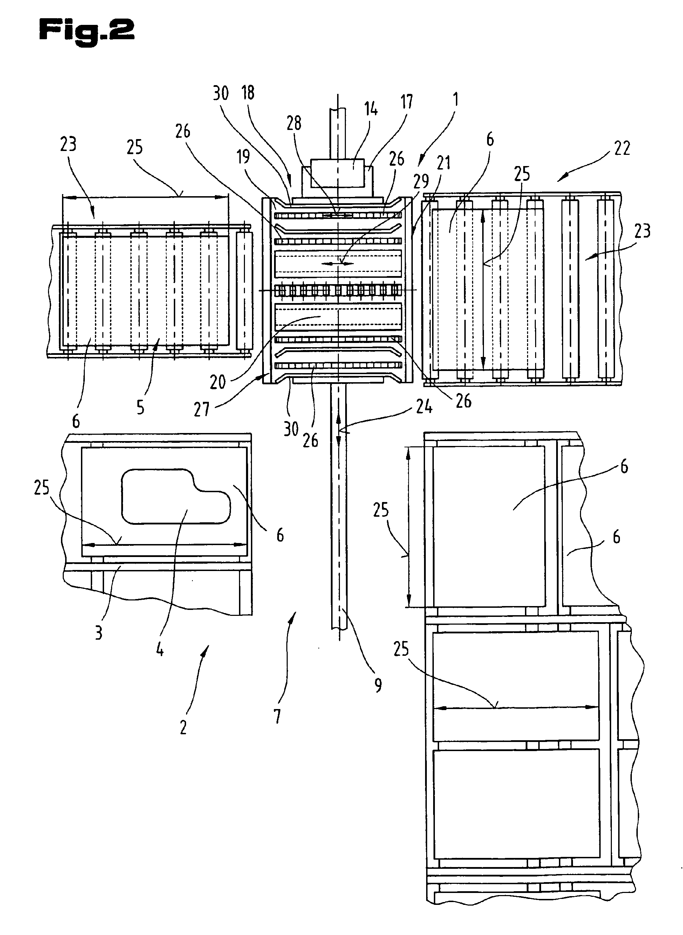

In der Fig. 2 ist ein Teilbereich des Regallagers 2 mit dem Regalbediengerät 1 und einem Zu- und/oder Abförderbereich 23 für die Ladehilfsmittel 5 gezeigt. In dem Zu- und Abförderbereich 22 sind gemäß der dargestellten Ausbildung Rollenbahnen 23 für die Zu- oder Abfuhr der Ladehilfsmittel 5 vorgesehen, mit denen diese bevorzugt in zu einer Verfahrrichtung - gemäß Doppelpfeil 24 - des Regalbediengeräts 1 senkrechter Richtung gefördert werden. Wie beispielsweise dargestellt kann es erforderlich sein, die Ladehilfsmittel 5 an das Lasttraggestell 18 des Regalbediengeräts 1 quer zu einer Länge 25 oder in Richtung der Länge 25 zuzuführen. In beiden Fällen soll eine Übernahme auf das Lasttraggestell 18 ohne der Zwischenschaltung von weiteren Manipulationseinrichtungen, wie z.B. Wendevorrichtungen oder der Vornahme von Manipulationen, am Lasttraggestell 18 möglich sein, da all diese zusätzlichen Maßnahmen die Ein- und Auslagerungsspielzeit durch Leerzeit verlängert und sich damit die Umschlagkosten und damit die Lagerkosten erhöhen.

Wie nun insbesondere der Fig. 2 zu entnehmen, ist auf dem Hubschlitten 17 des Regalbediengeräts 1 das Traggestell 19 des Lasttraggestells 18 angeordnet. Zusätzlich zu den bereits gewähnten, aus den Teleskop-Tragarmen 20 im wesentlichen gebildeten Tragvorrichtungen 21 sind am Traggestell 19 jeweils aus paarweise angeordneten Linearförderern 26 zwei Fördervorrichtungen 27 vorgesehen, mit einer Förderrichtung - gemäß Doppelpfeil 28 - parallel verlaufend zu einer Verstellrichtung - gemäß Doppelpfeil 29 - der Teleskoptragarme 20 und sind den Linearförderern 26 zur seitlichen Führung der Ladehilfsmittel 5 parallel verlaufende schienenförmige Führungselemente 30 zugeordnet. Weiters ist am Traggestell 19 längs einer zwischen den Teleskop-Tragarmen 20 verlaufenden Mittelebene 31 eine Stützvorrichtung 32 angeordnet, welche z.B. durch eine Rollenanordnung, endlos umlaufendes Band oder Kette gebildet sein kann.

Wie aus der Fig. 2 weiters zu entnehmen, bietet die erfindungsgemäße Ausführung des Lasttraggestells 18 mit den Tragvorrichtungen 21 und der aus mehreren Linearförderern 26 bestehenden Fördervorrichtungen 27 die Möglichkeit die Ladehilfsmittel 5 sowohl in Längs- oder Querausrichtung auf das Lasttraggestell 18 aufzunehmen oder von diesem abzugeben, ohne der Vornahme von Manipulationen durch Verstellung von Transportorganen. Die Aufnahme oder Abgabe des Ladehilfsmittels 5 von oder auf eine der Rollenbahnen 23 im Zu- und Abförderbereich 22 erfolgt durch den Betrieb der Linearförderer 26, wobei die Tragvorrichtungen 21 nicht betätigt werden. Dies bedeutet eine wesentliche Zeiteinsparung bei der Übernahme des Ladehilfsmittels 5 auf das Lasttraggestell 18. Dabei ist es selbstverständlich über z. B. Sensoren möglich die Linearförderer 26 erst nach Annäherung des Ladehilfsmittel 5 über die Rollenbahn 23 an das Lasttraggestell 18 in Betrieb zu setzen.

Die Ein- oder Auslagerung des Ladehilfsmittels 5 in oder aus dem Regal 3 erfolgt bei gleichzeitigem Betrieb der Tragvorrichtungen 21 und der Linearförderer 26, wodurch hohe Verfahrgeschwindigkeiten und damit kurze Lagerspielzeiten erreicht werden.

Weiters ist der Fig. 2 zu entnehmen, dass mit dem Lasttraggestell 18 bei entsprechender Regalkonzeption eine gemischte Einlagerung der Ladehilfsmittel 5, also in Richtung der Länge 25 oder dazu quer erfolgen kann, wodurch die Bedienung eines Lagers nach der Konzeption der freien Lagerplatzzuordnung vereinfacht und der Lagerumschlag weiter beschleunigt wird.

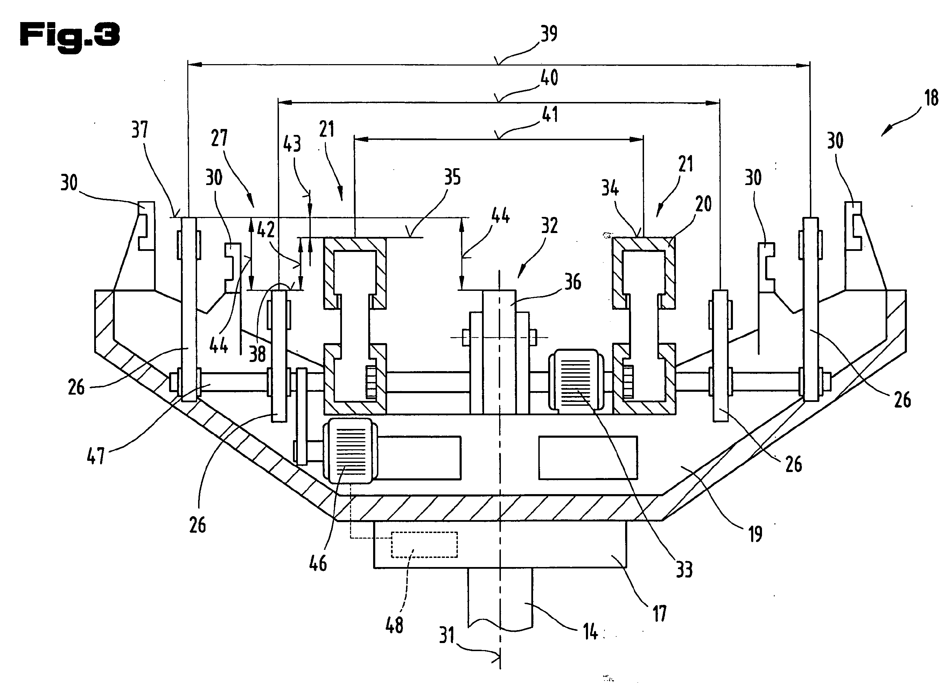

In der nachfolgend beschriebenen Fig. 3 ist nunmehr eine bevorzugte Ausführung des Lasttraggestells 18 gezeigt. Grundsätzlich ist das Lasttraggestell 18 im Hinblick auf geringes Eigengewicht konzipiert, um das Verhältnis aus Nutzlast zu Eigengewicht zu optimieren und einen Faktor zwischen 1,5 und 3 zu erreichen. Dies ermöglicht einerseits eine Minimierung des Energieeinsatzes beim Betrieb des Regalbediengerätes, wie dadurch auch höhere Beschleunigungen und damit letztendlich hohe Fahrgeschwindigkeiten für den Umschlag der Ladehilfsmittel 5 ermöglicht werden.

Das Traggestell 19 des Lasttraggestells 18 ist dazu in einer Blech-Profilbauweise in Richtung extremen Leichtbau konzipiert, wobei gelochte Profilstege zur Gewichtseinsparung wie auch Gewicht minimierte Knotenverbindungen in Abstimmung mit den erforderlichen Tragkräften Standard sind. Bevorzugt ist das Traggestell 19 in Schweißkonstruktion aus Metall, Leichtmetall etc. erstellt.

Auf dem Traggestell 19 sind nun die aus den zwei parallelen und parallel zur Mittelebene 31 zueinander beabstandeten Tragvorrichtungen 21 mit den Teleskop-Tragarmen 28 angeordnet, die zur Erzielung entsprechender Reichweiten in bekannter Ausbildung mehrfach teleskopierbar sind. Die Tragvorrichtungen 21 bzw. die Teleskop-Tragarme 20 sind über einen gemeinsamen Antrieb 33, insbesondere elektromotorisch betrieben. Selbstverständlich ist der Antrieb 33 reversibel und sind die Tragvorrichtung 21 dahingehend konzipiert, dass ein beidseitiges Ausfahren erreicht wird. Eine Lasttragfläche 34 der Teleskop-Tragarme 20 zur Abstützung des Ladehilfsmittels 5 wird zur weiteren Definition und Zuordnung der Fördervorrichtung 27 als Transportebene 35 bezeichnet. Im Verlauf der zwischen den Teleskop-Tragarmen 20 und parallel zu diesen und in einem rechten Winkel zur Transportebene 35 ausgerichteten Mittelebene 31 ist die durch eine Rollenanordnung 36 gebildete Stützvorrichtung 32 vorgesehen. Anstelle der Rollenbahn 36 sind für eine derartige Stützvorrichtung 32 aber auch andere Lösungen, wie z.B. eine endlos über Rollen umlaufende Kette oder ein Band möglich, wobei ein Antrieb für die Stützvorrichtung 32 nicht zwingend erforderlich ist.

Etwa symmetrisch zur Mittelebene 31 und zu dieser parallel verlaufend sind beidseits dieser jeweils zwei der Linearförderer 26 angeordnet, die paarweise jeweils im bezug auf die Mittelebene 31 paarweise Förderebenen 37, 38 ausbilden, mit zur Transportebene 35 unterschiedlichem Niveau. Zur Mittelebene 31 senkrecht verlaufende Mittelabstände 39, 40 sind größer einem Mittelabstand 41 der Tragvorrichtungen 21 und sind in ihrem Ausmaß unterschiedlich. Die von den den Tragvorrichtungen 21 näher zugeordneten Linearförderern 26 gebildete Förderebene 38 ist um eine Distanz 42 in Richtung des Traggestells 19 unterhalb der Transportebene 35 während die von den weiter beabstandeten Linearförderern 26 ausgebildete weitere Förderebene 37 um eine geringe Distanz 43 über der Transportebene 35 verläuft. Ein sich aus den Distanzen 42, 43 ergebender, senkrecht zur Transportebene 35 verlaufender Abstand 44 zwischen den Förderebenen 37, 38 entspricht dabei einer inneren lichten Höhe eines Paletten-Grundgestells oder einer Fußausbildung eines Stapelbehälters, Gitterboxen oder ähnlichen Ladehilfsmitteln.

Wie weiters der Fig. 3 zu entnehmen, sind den Linearförderern 26 entsprechend der Förderebene 37, 38 parallel verlaufend die schienenartigen Führungselemente 30 zugeordnet, die eine seitliche Begrenzung für die Förderebenen 37, 38 bilden, und sind diese auf die zur Förderung vorgesehene Länge 25 oder eine Breite 45der Ladehilfsmittel 5 abgestimmt.

Für die aus den Linearförderern 26 gebildeten Fördervorrichtungen 27 ist ein gemeinsamer Antrieb 46, bevorzugt ein elektromotorischer Antrieb, mit reversibler Antriebsrichtung vorgesehen. Dazu ist im Traggestell 19 der durch einen Elektromotor gebildete Antrieb 46 vorgesehen, der mit einem die Linearförderer 26 verbindenden Antriebsstrang 47 aus Wellen, Gelenkwellen etc. antriebsverbunden ist. Diese Ausbildung gewährleistet einen synchronen, gleichzeitigen Betrieb, der insgesamt vier Linearförderer 26. Mittels einer Steuereinrichtung 48 des Regalbediengerätes 1 wird in Abhängigkeit des Transportvorganges wahlweise der Antrieb 33 der Tragvorrichtungen 21 oder der Antrieb 46 der Fördervorrichtungen 27 oder die Antriebe 33, 46 gemeinsam angesteuert, womit ein dem jeweiligen Transportvorgang, wie noch später beschrieben, angepasster Betrieb des Lasttraggestells 18 erreicht wird.

Selbstverständlich ist aber auch je Fördervorrichtung 27, d.h. je Paar der Linearförderer 26 ein gemeinsamer Antrieb 46, oder auch überhaupt je Linearförderer ein eigener Antrieb 46 durchaus möglich und stellen diese Ausführungen durchaus weitere erfindungsgemäße Ausbildungen dar.

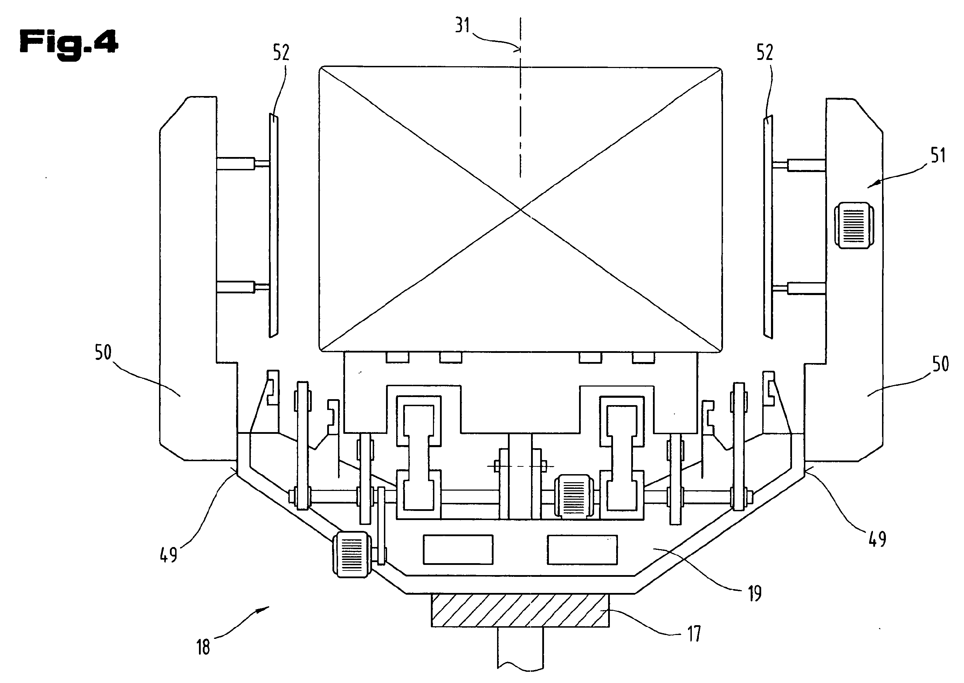

In der Fig. 4 ist in vereinfachter schematischer Darstellung eine weitere Ausbildung des Lasttraggestells 18 gezeigt. Dabei sind am Traggestell 19 an entgegengesetzten parallel zur Förderrichtung verlaufenden Seitenwänden 49 Stützkonsolen 50, die Transportebene 35 bzw. auch die Förderebenen 37, 38 überragend angeordnet, in denen über jeweils eine Antriebsvorrichtung 51 in zur Mittelebene 31 senkrechter Richtung verstellbare, bevorzugt plattenförmige Positionier- und/oder Haltemittel 52 geführt sind. Damit ist es möglich, dass Ladehilfsmittel auf dem Lasttraggestell 18 und damit im bezug auf die Tragvorrichtungen 21 und Fördervorrichtung 27 zu positionieren und während des Verfahrens des Regalbediengeräts 1 bzw. des Hubschlittens 17 in Position zu halten, wodurch es ebenfalls möglich ist, mit entsprechend höheren Verfahrgeschwindigkeiten die Ein- und Auslagervorgänge vorzunehmen und damit die Umschlagzeit wesentlich zu reduzieren.

Für die Antriebsvorrichtung 51 sowie für eine Führungsanordnung zwischen den Positionier- und/oder Haltemitteln 52 und den Stützkonsolen 50 sind eine Reihe von technischen Möglichkeiten aus dem Stand der Technik bekannt. So ist es beispielsweise möglich, die verstellbaren Positionier- und/oder Haltemittel 52 über eine Lenkhebelanordnung an den Stützkonsolen 50 zu lagern und die Antriebsvorrichtung 51 als Kurbeltriebe auszubilden, die elektromotorisch betätigt werden. Selbstverständlich sind auch weitere technische Ausbildungen durchaus im Bereich der Möglichkeit.

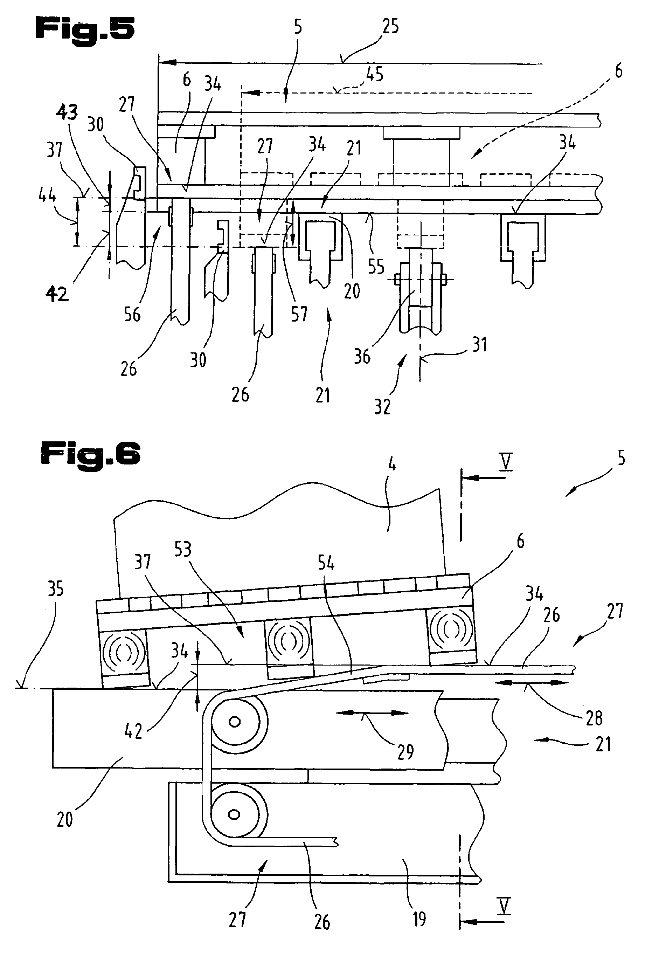

Anhand den Fig. 5 und 6 ist nun ein Transportvorgang des Ladehilfsmittels 5, insbesondere eine Palette 6, dargestellt, wobei die gezeigte Situation sowohl für einen Ein- wie auch Auslagervorgang in oder aus einem Regallager 2 gleichermaßen in umgekehrter Verstellrichtung der Teleskop-Lastarme 21 - gemäß Doppelpfeil 29 - und der Linearförderer 26 - gemäß Doppelpfeil 28 - abläuft. Im gezeigten Ausführungsbeispiel ist die Palette 6 in vollen Linie für eine sogenannte Querförderung, also einer Förderung in zur Länge 25 quer verlaufender Richtung gezeigt und in strichlierten Linien die Aufnahme oder Abgabe der Palette 6 auf den Teleskop-Tragarmen 20 in Längsrichtung dargestellt. Sowohl beim Abtransport der Palette aus dem Bereich des Lasttraggestells 18 wie auch beim Aufnehmen der Palette 6 in den Bereich des Lasttraggestells 18 erfolgt eine synchrone, gleichzeitige Verstellung der Teleskop-Tragarme 20 der Tragvorrichtungen 21 und Linearförderern 26 der Fördervorrichtungen 27. Im Bereich des Lasttraggestells 18 ist die Palette 6 auf den Lasttragflächen 34 der Linearförderer 26 aufgelagert, welche die Förderebene 37 bzw. Förderebene 38 mit zu der Lasttragfläche 34 der Teleskop-Tragarme 20 unterschiedlichen Niveau, wie bereits vorhergehend beschrieben, abstützt.

In einem Endbereich 53 verläuft ein Transportorgan 54 in Richtung der Lasttragfläche 34 geneigt, wodurch es bei dem Transport der Palette 6 jeweils zu einem Absenken der jeweiligen, entsprechend der Ausrichtung der Palette 6 zur Auflagerung auf der Lasttragfläche 34 bestimmten Unterseite 55 kommt. Durch die Kombination der Vorschubbewegung der Linearförderer 26 und der Last-Tragarmen 20 ist die Erzielung einer höheren Vorschubgeschwindigkeit möglich und wird die Umschlagzeit, auch Spielzeit genannt, wesentlich reduziert.

Selbstverständlich ist es steuerungstechnisch möglich, die Antriebe 33 und 46 dermaßen aufeinander abzustimmen, dass die Fördervorrichtungen 27 bei der Aufnahme der Palette 6 auf das Lasttraggestell 18 erst zugeschaltet werden, wenn die Palette 6 mit den Teleskop-Last-tragarmen 20 den Bereich der Linearförderer 26 erreicht. Bei der Abgabe der Paletten aus dem Bereich des Lasttraggestells 18 kann umgekehrt der Antrieb 46 der Linearförderer 26 dann still gesetzt werden, wenn die Palette 6 zur Gänze auf der Lasttragfläche 34 der Teleskop-Tragarmen 20 aufgenommen wird. Damit wird eine weitere effiziente Energienutzung für den wirtschaftlichen Betrieb des Regalbediengeräts 1 erreicht.

Dadurch, dass ein Unterbau 56 der Paletten 6 aber vielfach auch von sonstigen Ladehilfsmitteln 5, wie z.B. Boxen, für die Auflagerung auf der Lasttragfläche 34 in Abhängigkeit einer Förderung in Längsrichtung oder quer dazu auf unterschiedlichem Niveau verlaufende Unterseiten 55 aufweisen, ergibt sich der Abstand 44 zwischen den Förderebenen 37, 38 entsprechend einer inneren Höhe 57 des Unterbaus 56 des Ladehilfsmittel 5.

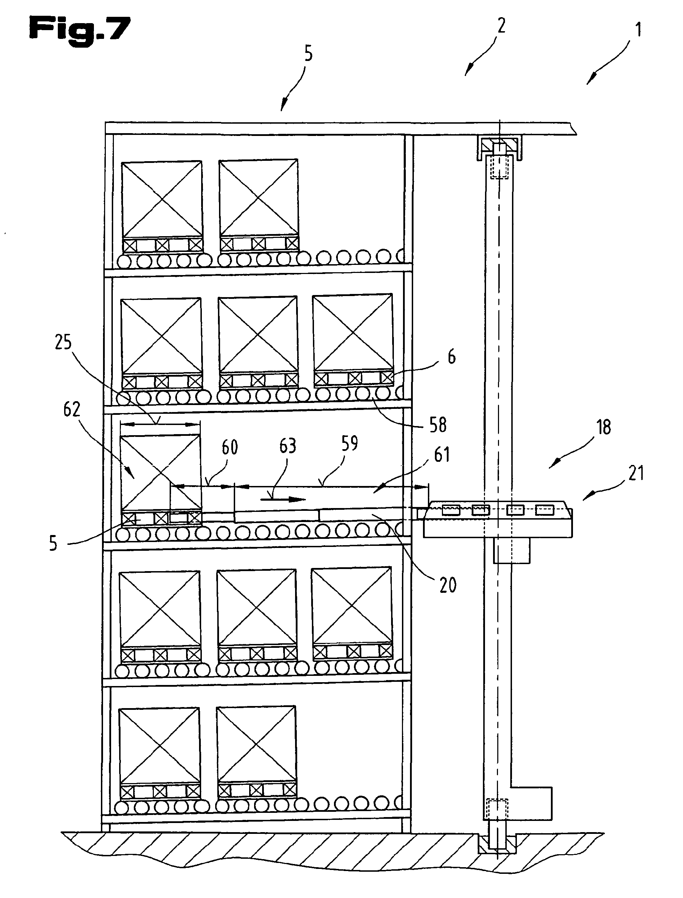

In der Fig. 7 ist eine andere Ausbildung des Lasttraggestells 18 der Regalbediengerätes 1 gezeigt. Das Regallager 2 weist darnach sogenannte Schwerkraft- Rollenbahnen 58 zur Aufnahme der Ladehilfsmittel 5 z.B. der Paletten 6 auf. Ausgelegt ist dieses Regallager 2 beispielhaft für die Aufnahme von drei der Ladehilfsmittel 5 in hintereinander Lagerung unabhängig von einer Längs- oder Quereinlagerung.

Das Lasttraggestell 18 weist dazu die durch die Teleskop- Tragarmen 20 gebildeten Tragvorrichtungen 21 auf, die um einen zusätzlichen, einen Ausfahrweg 59 für eine zweifach Lagerung überragenden Verstellweg 60 ausfahrbar ausgebildet sind.

Die Einlagerung des Ladehilfsmittels 5 erfolgt mittels der einfach ausgefahrenen Teleskop-Tragarme 20 auf die geneigt verlaufenden Schwerkraft- Rollenbahnen 58 auf den zunächst dem Regalbediengerät 1 gegebenen Stellplatz 61 von wo aus ein durch die Schwerkraft bedingter Ablauf auf einen entfernten Stellplatz 62 erfolgt.

Zur Entnahme des Ladehilfsmittels 5 von diesem entfernten Stellplatz 62 werden die Teleskop- Lastarme 20 des Tragvorrichtungen 21 um den Ausfahrweg 59 und zusätzlich um den weiteren Verstellweg 60 ausgefahren der z.B. ¼ der Länge 25 der Paletten 6 beträgt. Durch Anheben der Teleskop- Tragarme 20 entsteht ein Reibungsschluss mit der Palette 5 die dadurch bei einer Einfahrbewegung gemäß - Pfeil 63 - der Teleskop- Lasttragarme 20 auf der Schwerkraft- Rollenbahn 58 abgestützt in Richtung eines dem Regalbediengerätes 1 näher gelegenen Stellplatz z.B. Stellplatz 61 gezogen wird. Von diesem aus kann das Lasttraggestell 18 durch ein rasches Umsetzen der Teleskop- Tragarme 20 für den üblichen Auslagerungsvorgang aufgenommen werden.

Es wird weiters noch angemerkt, dass eine derartige Ausbildung auch für beidseits eines Regalganges angeordnete Regale vorgesehen werden kann.

Der Ordnung halber sei abschließend darauf hingewiesen, dass zum besseren Verständnis des Aufbaus des Lasttragmittels dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Regalbediengerät
- 2: Regallager
- 3: Regal
- 4: Waren
- 5: Ladehilfsmittel

- 6: Palette
- 7: Regalgang
- 8: Aufstandsfläche
- 9: Schiene
- 10: Schiene

- 11: Decke
- 12: Fahrwerk
- 13: Antrieb
- 14: Mast
- 15: Führungsanordnung

- 16: Antrieb
- 17: Hubschlitten
- 18: Lasttraggestell
- 19: Traggestell
- 20: Teleskop-Tragarm

- 21: Tragvorrichtung
- 22: Zu- und Abförderbereich
- 23: Rollenbahn
- 24: Doppelpfeil
- 25: Länge

- 26: Linearförderer
- 27: Fördervorrichtung
- 28: Doppelpfeil
- 29: Doppelpfeil
- 30: Führungselement

- 31: Mittelebene
- 32: Stützvorrichtung
- 33: Antrieb
- 34: Lasttragfläche
- 35: Transportebene

- 36: Rollenbahn
- 37: Förderebene
- 38: Förderebene
- 39: Mittelabstand
- 40: Mittelabstand

- 41: Mittelabstand
- 42: Distanz
- 43: Distanz
- 44: Abstand
- 45: Breite

- 46: Antrieb
- 47: Antriebsstrang
- 48: Steuereinrichtung
- 49: Seitenwand
- 50: Stützkonsole

- 51: Antriebsvorrichtung
- 52: Positionier- und/oder Haltemittel
- 53: Endbereich
- 54: Transportorgan
- 55: Unterseite

- 56: Unterbau
- 57: Höhe
- 58: Schwerkraft-Rollenbahn
- 59: Ausfahrweg
- 60: Verstellweg

- 61: Stellplatz
- 62: Stellplatz
- 63: Pfeil

## Patentansprüche

1. Lasttraggestell (18) für ein Fördergerät, insbesondere Regalbediengerät (1), mit einem auf einem Hubschlitten (17) des Fördergerätes befestigbaren Traggestell (19) und mit auf diesem parallel zueinander angeordneten Tragvorrichtungen (21) mit verfahrbaren Teleskop-Tragarmen (20) zur Aufnahme eines Ladehilfsmittels wie Palette (6), Box etc. und einer zu einer Verstellrichtung der Tragvorrichtungen (21) eine parallel verlaufende Förderrichtung ausbildenden Fördereinrichtung mit zwei im bezug auf eine zwischen den Tragvorrichtungen (21) senkrecht zu einer Aufstandsfläche (8) des Regalbediengerätes (1) verlaufenden Mittelebene (31) symmetrisch angeordneten Fördervorrichtungen (27) aus jeweils zwei, eine zu einer Verstellrichtung der Tragvorrichtungen (21) parallele Förderrichtung ausbildenden Linearförderern (26) gebildet sind und zur Mittelebene (31) senkrecht verlaufende Mittelabstände (39, 40) der Linearförderer (26) größer sind als ein Mittelabstand (41) der Tragvorrichtungen (21), **dadurch gekennzeichnet, dass** die Linearförderer (26) der Fördervorrichtungen (27) mit Lasttragflächen (34) zwei, zueinander in einem Abstand (44) parallele, senkrecht zur Mittelebene (31) verlaufende Förderebenen (37, 38), ausbilden und eine Förderebene (37) im bezug auf eine, durch die Lasttragfläche (34) der Tragvorrichtungen (21) gebildete Transportebene (35) in einer geringen Distanz (43) oberhalb der Transportebene (35) und die weitere Förderebene (38) in einer Distanz (42) unterhalb der Transportebene (35) verlaufen.

2. Lasttraggestell nach Anspruch 1, **dadurch gekennzeichnet, dass** der Abstand (44) zwischen den Förderebenen (37, 38) einer inneren Höhe (57) eines Unterbaues (56) des Ladehilfsmittels (5) entspricht.

3. Lasttraggestell nach Anspruch 1 oder 2, **dadurch gekennzeichnet, dass** ein Mittelabstand (40) zwischen den die unterhalb der Transportebene (35) gelegene Förderebene (38) ausbildendenden Linearförderern (26) größer ist als ein Mittelabstand (41) der Tragvorrichtungen (21), jedoch kleiner ist als ein Mittelabstand (39), der die oberhalb der Transportebene (35) verlaufenden Förderebene (37) ausbildenden Linearförderer (26).

4. Lasttraggestell nach einem oder mehreren der vorhergehenden Ansprüche, **dadurch** ge kennzeichnet, dass die Linearförderer (26) durch Ketten- oder Bandförderer oder Riementriebe gebildet sind.

5. Lasttraggestell nach einem oder mehreren der vorhergehenden Ansprüche, **dadurch gekennzeichnet, dass** die Linearförderer (26) gemeinsam oder einzeln und mit einem Antrieb (46), insbesondere Elektroantrieb, antriebsverbunden sind.

6. Lasttraggestell nach einem oder mehreren der vorhergehenden Ansprüche, **dadurch gekennzeichnet, dass** die Tragvorrichtungen (21) miteinander und mit einem Antrieb (33) insbesondere Elektroantrieb antriebsverbunden sind.

7. Lasttraggestell nach einem oder mehreren der vorhergehenden Ansprüche, **dadurch gekennzeichnet, dass** über die Länge des Traggestells (19) die Förderebenen (37, 38) in zu einer zur Förderrichtung senkrecht verlaufenden Richtung eine Förderweite begrenzende, schienenförmige Führungselemente (30) angeordnet sind.

8. Lasttraggestell nach einem oder mehreren der vorhergehenden Ansprüche, **dadurch gekennzeichnet, dass** die Führungselemente (30) durch Rollenschienen oder durch Führungsschienen gebildet sind.

9. Lasttraggestell nach einem oder mehreren der vorhergehenden Ansprüche, **dadurch gekennzeichnet, dass** die Führungselemente (30) am Traggestell (19) verstellbar abgestützt sind.

10. Lasttraggestell nach einem oder mehreren der vorhergehenden Ansprüche, **dadurch gekennzeichnet, dass** die Teleskop-Tragarme (20) durch mehrfach Teleskopanordnungen gebildet sind.

11. Lasttraggestell nach einem oder mehreren der vorhergehenden Ansprüche, **dadurch gekennzeichnet, dass** ein Verstellweg der Teleskop-Tragarme (20) zumindest dem doppelten Betrag einer Ladetiefe des Lasttraggestells (18) beidseits einer Nullposition am Traggestell (19) entspricht.

12. Lasttraggestell nach einem oder mehreren der vorhergehenden Ansprüche, **dadurch** ge kennzeichnet, dass eine Länge der Linearförderer (26) etwa der Ladetiefe des Lasttraggestells (18) entspricht.

13. Lasttraggestell nach einem oder mehreren der vorhergehenden Ansprüche, **dadurch gekennzeichnet, dass** an entgegengesetzten Endbereichen (53) die Linearförderer (26) geneigt verlaufende Auf- und Ablaufbereiche an Transportorganen (54) ausbilden.

14. Lasttraggestell nach einem oder mehreren der vorhergehenden Ansprüche, **dadurch gekennzeichnet, dass** der Antrieb (46) für die Linearförderer (26) reversierbar ausgebildet ist.

15. Lasttraggestell nach einem oder mehreren der vorhergehenden Ansprüche, **dadurch gekennzeichnet, dass** der Antrieb (33) für die Tragvorrichtungen (21) reversierbar ausgebildet ist.

16. Lasttraggestell nach einem oder mehreren der vorhergehenden Ansprüche, **dadurch gekennzeichnet, dass** die Antriebe (33, 46) für die Tragvorrichtungen (21) und die Fördervorrichtungen (27) über eine Steuereinrichtung (48) des Regalbediengerätes (1) wahlweise einzeln oder gemeinsam ansteuer- und mit Energie beaufschlagbar ausgebildet sind.

17. Lasttraggestell nach einem oder mehreren der vorhergehenden Ansprüche, **dadurch gekennzeichnet, dass** am Traggestell (19) an zur Förderrichtung parallel verlaufenden Seitenwänden (49) die Transportebene (35) überragende Stützkonsolen (50) angeordnet sind.

18. Lasttraggestell nach einem oder mehreren der vorhergehenden Ansprüche, **dadurch gekennzeichnet, dass** an den Stützkonsolen (50) eine Förderweite beidseits begrenzende, in zur Förderrichtung senkrecht verlaufenden Richtung über eine Antriebsvorrichtung (51) verstellbare Positionier- und/oder Haltemittel (52) angeordnet sind.

19. Lasttraggestell nach einem oder mehreren der vorhergehenden Ansprüche, **dadurch gekennzeichnet, dass** die Positionier- und /oder Haltemittel (52) über Führungsanordnungen an den Stützkonsolen (50) gelagert sind.

20. Lasttraggestell nach einem oder mehreren der vorhergehenden Ansprüche, **dadurch gekennzeichnet, dass** die Führungsanordnung durch eine Lenkhebelanordnung gebildet ist.

21. Lasttraggestell nach einem oder mehreren der vorhergehenden Ansprüche, **dadurch gekennzeichnet, dass** die Positionier- und/oder Haltemittel (52) über vorzugsweise motorisch betätigte Kurbeltriebwerke verstellbar ausgebildet sind:

22. Lasttraggestell nach einem oder mehreren der vorhergehenden Ansprüche, **dadurch gekennzeichnet, dass** die Kurbeltriebwerke bzw. die Antriebsvorrichtung (51) mittels Überlast-Sicherungsmittel an den Stützkonsolen (50) abgestützt sind.

23. Lasttraggestell nach einem oder mehreren der vorhergehenden Ansprüche, **dadurch gekennzeichnet, dass** das Traggestell (19) in einer Blechprofil-Leichtbauweise erstellt ist.

24. Lasttraggestell nach einem oder mehreren der vorhergehenden Ansprüche, **dadurch gekennzeichnet, dass** das Traggestell (19) aus Leichtmetall gebildet ist.

## Claims

1. Load-bearing frame (18) for a conveyor device, in particular a shelf-stacking device (1), with a support frame (19) which can be secured on a lift (17) of the conveyor device and, disposed on it, mutually parallel support mechanisms (21) with displaceable telescopic support arms (20) for receiving a storage unit such as a pallet (6), box, etc., and a conveyor system forming a conveying direction extending parallel with a displacement direction of the support mechanisms (21), with conveyor mechanisms (27) disposed symmetrically by reference to a mid-plane (31) and extending between the support mechanisms (21) perpendicular to the standing surface (8) of the shelf-stacking device (1) provided in the form of two respective linear conveyors (26) forming a conveyor direction parallel with a displacement direction of the support mechanisms (21), and mean distances (39, 40) of the linear conveyors (26) extending perpendicular to the mid-plane (31) are greater than a mean distance (41) of the support mechanisms (21), **characterised in that** the linear conveyors (26) of the conveyor mechanisms (27) form two parallel conveyor planes (37, 38) with load bearing surfaces (34) disposed at a distance (44) from one another extending perpendicular to the mid-plane (31) and, by reference to a transport plane (35) formed by the load bearing surface (34) of the support mechanisms (21), one conveyor plane (37)extends at a slight distance (43) above the transport plane (35) and the other conveyor plane (38) extends at a distance (42) below the transport plane (35).

2. Load-bearing frame as claimed in claim 1, **characterised in that** the distance (44) between the conveyor planes (37, 38) corresponds to an internal height (57) of a substructure (56) of the storage unit (5).

3. Load-bearing frame as claimed in claim 1 or 2, **characterised in that** a mean distance (40) between the linear conveyors (26) forming the conveyor plane (38) below the transport plane (35) is greater than a mean distance (41) of the support mechanisms (21) but shorter than a mean distance (39) of the linear conveyors (26) forming the conveyor plane (37) extending above the transport plane (35).

4. Load-bearing frame as claimed in one or more of the preceding claims, **characterised in that** the linear conveyors (26) are provided in the form of chain or belt conveyors or belt drives.

5. Load-bearing frame as claimed in one or more of the preceding claims, **characterised in that** the linear conveyors (26) are drivingly linked, jointly or individually to one another and to a drive (46), in particular an electric drive.

6. Load-bearing frame as claimed in one or more of the preceding claims, **characterised in that** the support mechanisms (21) are drivingly linked to one another and to a drive (33), in particular an electric drive.

7. Load-bearing frame as claimed in one or more of the preceding claims, **characterised in that** rail-type guide elements (30) are provided along the length of the support frame (19) bounding the conveyor planes (37, 38) in a conveyor width extending in a direction perpendicular to the conveying direction.

8. Load-bearing frame as claimed in one or more of the preceding claims, **characterised in that** the guide elements (30) are provided in the form of roller tracks or by guide rails.

9. Load-bearing frame as claimed in one or more of the preceding claims, **characterised in that** the guide elements (30) are displaceably supported on the support frame (19).

10. Load-bearing frame as claimed in one or more of the preceding claims, **characterised in that** the telescopic support arms (20) are designed with multiple telescoping systems.

11. Load-bearing frame as claimed in one or more of the preceding claims, **characterised in that** a displacement path of the telescopic support arms (20) corresponds to at least twice the amount of a loading depth of the load-bearing frame (18) on either side of a zero position on the support frame (19).

12. Load-bearing frame as claimed in one or more of the preceding claims, **characterised in that** a length of the linear conveyors (26) approximately corresponds to the loading depth of the load-bearing frame (18).

13. Load-bearing frame as claimed in one or more of the preceding claims, **characterised in that** the linear conveyors (26) form inclined receiving and despatching areas at opposite end regions (53) adjoining transport elements (54).

14. Load-bearing frame as claimed in one or more of the preceding claims, **characterised in that** the drive (46) for the linear conveyors (26) is reversible.

15. Load-bearing frame as claimed in one or more of the preceding claims, **characterised in that** the drive (33) for the support mechanisms (21) is reversible.

16. Load-bearing frame as claimed in one or more of the preceding claims, **characterised in that** the drives (33, 46) for the support mechanisms (21) and the conveyor mechanisms (27) may optionally be individually or jointly activated and supplied with energy via a control system (48) of the shelf-stacking device (1).

17. Load-bearing frame as claimed in one or more of the preceding claims, **characterised in that** support brackets (50) projecting above the transport plane (35) are provided on the support frame (19), on side walls (49) extending parallel with the conveying direction.

18. Load-bearing frame as claimed in one or more of the preceding claims, **characterised in that** positioning and/or retaining means (52) are provided on the support brackets (50) bounding the two sides of a conveyor width and are displaceable in a direction extending perpendicular to the conveying direction by means of a drive mechanism (51).

19. Load-bearing frame as claimed in one or more of the preceding claims, **characterised in that** the positioning and/or retaining means (52) are mounted on the support brackets (50) by means of guide systems.

20. Load-bearing frame as claimed in one or more of the preceding claims, **characterised in that** the guide system is a pivoting lever system.

21. Load-bearing frame as claimed in one or more of the preceding claims, **characterised in that** the positioning and/or retaining means (52) are displaceable by means of a crank drive which is preferably motor-operated.

22. Load-bearing frame as claimed in one or more of the preceding claims, **characterised in that** the crank drive and the drive mechanism (51) are supported on the support brackets (50) by means of overload-safety means.

23. Load-bearing frame as claimed in one or more of the preceding claims, **characterised in that** the support frame (19) is made in a lightweight structure from sheet-metal sections.

24. Load-bearing frame as claimed in one or more of the preceding claims, **characterised in that** the support frame (19) is made from lightweight metal.

## Revendications

1. Cadre de support de charge (18) pour un appareil de convoyage, en particulier un transstockeur (1), avec un cadre de support (19) pouvant être fixé sur un chariot de levage (17) de l'appareil de convoyage et avec des dispositifs de support (21) disposés sur celui-ci parallèlement les uns aux autres avec des bras de support télescopiques déplaçables (20) pour la réception d'un moyen auxiliaire de charge, comme une palette (6), une boîte etc. et une installation de convoyage réalisant une direction de convoyage s'étendant parallèlement à une direction de déplacement des dispositifs de support (21) avec deux dispositifs de convoyage (27) disposés symétriquement par rapport à un plan médian (31) s'étendant entre les dispositifs de support (21) perpendiculairement à une face d'appui (8) du transstockeur (1) constitués respectivement de deux convoyeurs linéaires (26) réalisant une direction de convoyage parallèle à une direction de déplacement des dispositifs de support (21), et des écarts médians (39, 40), s'étendant perpendiculairement au plan médian (31), des convoyeurs linéaires (26) sont plus grands qu'un écart médian (41) des dispositifs de support (21), **caractérisé en ce que** les convoyeurs linéaires (26) des dispositifs de convoyage (27) avec les faces de support de charge (34) forment deux plans de convoyage (37, 38) parallèles l'un à l'autre à une distance (44), s'étend perpendiculairement au plan médian (31), et un plan de convoyage (37) s'étend par rapport à un plan de transport (35) formé par la face de support de charge (34) des dispositif de support (21) à une faible distance (43) au-dessus du plan de transport (35) et l'autre plan de transport (38) s'étend à une distance (42) en dessous du plan de transport (35).

2. Cadre de support de charge selon la revendication 1, **caractérisé en ce que** l'espacement (44) entre les plans de convoyage (37, 38) correspond à une hauteur intérieure (57) d'une infrastructure (56) du moyen auxiliaire de charge (5).

3. Cadre de support de charge selon la revendication 1 ou 2, **caractérisé en ce qu'**un espacement médian (40) entre les convoyeurs linéaires (26) formant le plan de convoyage (38) situé en dessous du plan de transport (35) est plus grand qu'un espacement médian (41) des dispositifs de support (21), cependant plus petit qu'un espacement médian (39) des convoyeurs linéaires (26) réalisant le plan de convoyage (37) s'étendant au dessus du plan de transport (35).

4. Cadre de support de charge selon l'une ou plusieurs des revendications précédentes, **caractérisé en ce que** les convoyeurs linéaires (26) sont formés par des convoyeurs à chaîne ou à bande ou des commandes à courroie.

5. Cadre de support de charge selon l'une ou plusieurs des revendications précédentes, **caractérisé en ce que** les convoyeurs linéaires (26) sont reliés, quant à leur entraînement, conjointement ou individuellement et avec un entraînement (46), en particulier un entraînement électrique.

6. Cadre de support de charge selon l'une ou plusieurs des revendications précédentes, **caractérisé en ce que** les dispositifs de support (21) sont reliés, quant à leur entraînement, les uns aux autres et à un entraînement (33), en particulier un entraînement électrique.

7. Cadre de support de charge selon l'une ou plusieurs des revendications précédentes, **caractérisé en ce que** sur la longueur du cadre de support (19), les plans de convoyage (37, 38) sont disposés dans des éléments de guidage en forme de rail (30), délimitant une largeur de convoyage dans une direction s'étendant perpendiculairement à la direction de convoyage.

8. Cadre de support de charge selon l'une ou plusieurs des revendications précédentes, **caractérisé en ce que** les éléments de guidage (30) sont formés par des rails à rouleaux ou par des rails de guidage.

9. Cadre de support de charge selon l'une ou plusieurs des revendications précédentes, **caractérisé en ce que** les éléments de guidage (30) s'appuient d'une manière ajustable au cadre de support (19).

10. Cadre de support de charge selon l'une ou plusieurs des revendications précédentes, **caractérisé en ce que** les bras de support télescopiques (20) sont formés par des agencements télescopiques multiples.

11. Cadre de support de charge selon l'une ou plusieurs des revendications précédentes, **caractérisé en ce qu'**un chemin de déplacement des bras de support télescopiques (20) correspond au moins à la valeur double d'une profondeur de charge du cadre de support de charge (18) des deux côtés d'une position zéro au cade de support (19).

12. Cadre de support de charge selon l'une ou plusieurs des revendications précédentes, **caractérisé en ce qu'**une longueur des convoyeurs linéaires (26) correspond à peu près à la profondeur de charge du cadre de support de charge (18).

13. Cadre de support de charge selon l'une ou plusieurs des revendications précédentes, **caractérisé en ce que** les convoyeurs linéaires (26) réalisent aux zones d'extrémité opposées (53) des zones de montée et de descente inclinées à des organes de transport (54).

14. Cadre de support de charge selon l'une ou plusieurs des revendications précédentes, **caractérisé en ce que** l'entraînement (46) pour les convoyeurs linéaires (26) est réalisé d'une manière réversible.

15. Cadre de support de charge selon l'une ou plusieurs des revendications précédentes, **caractérisé en ce que** l'entraînement (33) pour les dispositifs de support (21) est réalisé d'une manière réversible.

16. Cadre de support de charge selon l'une ou plusieurs des revendications précédentes, **caractérisé en ce que** les entraînements (33, 46) pour les dispositifs de support (21) et les dispositifs de convoyage (27) sont réalisés pour pouvoir être commandés par une installation de commande (48) du transstockeur (1) sélectivement individuellement ou conjointement et peuvent être chargés en énergie.

17. Cadre de support de charge selon l'une ou plusieurs des revendications précédentes, **caractérisé en ce que** des consoles de soutien (50) faisant saillie sur le plan de transport (35) sont disposées au cadre de support (19) à des parois latérales (49) s'étendant parallèlement à la direction de convoyage.

18. Cadre de support de charge selon l'une ou plusieurs des revendications précédentes, **caractérisé en ce que** sont disposés aux consoles de soutien (50) des moyens de positionnement et/ou de retenue (52) délimitant une largeur de convoyage des deux côtés, ajustables par un dispositif d'entraînement (51) dans une direction s'étendant perpendiculairement à la direction de convoyage.

19. Cadre de support de charge selon l'une ou plusieurs des revendications précédentes, **caractérisé en ce que** les moyens de positionnement et/ou de retenue (52) sont logés par des agencements de guidage aux consoles de soutien (50).

20. Cadre de support de charge selon l'une ou plusieurs des revendications précédentes, **caractérisé en ce que** l'agencement de guidage est formé par un agencement à levier de guidage.

21. Cadre de support de charge selon l'une ou plusieurs des revendications précédentes, **caractérisé en ce que** les moyens de positionnement et/ou de retenue (52) sont réalisés d'une manière ajustable par des mécanismes à manivelle actionnables de préférence par moteur.

22. Cadre de support de charge selon l'une ou plusieurs des revendications précédentes, **caractérisé en ce que** les mécanismes à manivelle respectivement le dispositif d'entraînement (51), s'appuie par des moyens de sécurité à l'encontre d'une surcharge sur les consoles de soutien (50).

23. Cadre de support de charge selon l'une ou plusieurs des revendications précédentes, **caractérisé en ce que** le cadre de support (19) est réalisé selon un mode de construction léger en tôle profilée.

24. Cadre de support de charge selon l'une ou plusieurs des revendications précédentes, **caractérisé en ce que** le cadre de support (19) est réalisé en métal léger.
